(19) Europäisches Patentamt

European Patent Office

Office européen des brevets

(11) **EP 4 002 256 A1**

(12) **EUROPEAN PATENT APPLICATION**

(43) Date of publication:
**25.05.2022 Bulletin 2022/21**

(21) Application number: **20207048.8**

(22) Date of filing: **11.11.2020**

(51) International Patent Classification (IPC):
**G06Q 30/06** (2012.01)    **G06Q 20/38** (2012.01)

(52) Cooperative Patent Classification (CPC):
**G06Q 30/0601; G06Q 20/382; G06Q 20/383; G06Q 20/385**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Barclays Execution Services Limited London E14 5HP (GB)**

(72) Inventor: **SANAP, Vickhram Bhimrao 411014 Pune (IN)**

(74) Representative: **Carpmaels & Ransford LLP One Southampton Row London WC1B 5HA (GB)**

(54)    **SECURE PROCESSING OF PAYMENT TRANSACTIONS**

(57)    A one-time transaction token is requested by a user from a payment provider system for a payment transaction initiated by the user. The one-time transaction token is stored by the payment provider system. The one-time transaction token is provided to the user, and the user provides the one-time transaction token to a transaction processing system and from there to an acquirer processing system. Based on the one-time transaction token received, the acquirer processing system identifies the payment provider system which generated the one-time transaction token and transmits it to the identified payment provider system. Upon receipt of the one-time transaction token, the identified payment provider system validates the received one-time transaction token with the one-time transaction token previously generated by the identified payment provider system. If validated, the identified payment provider system generates transaction payment data for the user and transmits it to the acquirer processing system to complete the payment transaction.

Fig. 3

EP 4 002 256 A1

**Description**

**Technical Field**

The invention described herein pertains to a computer-implemented method, a data processing apparatus, a computer program, and a computer-readable storage medium for securely processing a payment transaction.

**Background**

Payment transactions are typically performed with a payment processing network to facilitate communication between a user device, merchant, acquirer bank, and issuer bank. Payment transactions are currently based on a physical card issued by a financial institutions on which there is printed a primary account number (PAN). The physical card can be used to complete a transaction, in which case transactional information is retrieved by the merchant by, for example, inserting a card into a point of sale (POS) terminal, swiping the magnetic strip, or a contactless protocol, for example near field communication (NFC).

Alternatively, the PAN can be used directly, for example for online, e-commerce, transactions, in which the PAN is entered by a user into a field on a browser. Alternatively, scanning software can be used to read the printed PAN on the physical card and populate the browser fields automatically.

However the card information is related to the merchant, transactions will often use a token to represent said card information. A token is a surrogate value representing a PAN, from which the PAN can only be retrieved by a trusted party. A token may be generated, for example, using a symmetric encryption algorithm, such that only parties who possess the encryption key can retrieve the PAN underlying the token. The key may be circulated to trusted parties, who can then retrieve the PAN.

In order for a transaction using tokenisation to be effective, the PAN must first have been sent to a tokenisation service, in order to provision a token associated with the PAN and store said token and PAN in a registry. When a transaction is being carried out, a token can be presented to a merchant, forwarded to an acquirer bank and then sent to the tokenisation service. The tokenisation service may then retrieve the PAN and send it via one or more processing networks to the issuer bank, who can authorise the transaction and return the PAN to the tokenisation service. In this way, the tokenisation service can function as a middle-man between the acquirer and issuer bank, ensuring that the acquirer bank and merchant never have access to the PAN, which is sensitive data. One such method is described in US2020/0034837A1, which uses multi-network tokenisation processing in order to transfer the token and PAN between the network token service and issuer computer.

In such methods, the PAN is required to be transferred between the user device and tokenisation service, however, and between the tokenisation service and the issuer. There are therefore opportunities to intercept the PAN as it is being transferred, and void any security advantage gained by tokenising the PAN.

**Summary**

In one aspect of the invention, there is a method for securely processing a payment transaction, comprising: a) requesting a one-time transaction token by a user from a payment provider system for a payment transaction initiated by the user; b) in response to the request, generating by the payment provider system the one-time transaction token; c) storing the one-time transaction token by the payment provider system; d) providing the one-time transaction token to a transaction processing system and from there to an acquirer processing system; e) based on the one-time transaction token received, the acquirer processing system identifying the payment provider system which generated the one-time transaction token and transmitting the one-time transaction token to the identified payment provider system; f) upon receipt of the one-time transaction token, the identified payment provider system validating the received one-time transaction token with the one-time transaction token previously generated by the identified payment provider system; g) if validated, the identified payment provider system generating transaction payment data for the user and transmitting the transaction payment data to the acquirer processing system to complete the payment transaction.

In this way, the method provides a more secure payment transaction. The present method is able to treat a user's financial data, for example their primary account number (PAN), more securely both during token generation and during the payment transaction.

During token generation with the present method, the token is generated within the payment provider system, and not by an external token issuing/provisioning service. The payment provider system already has access to the user's personal and financial data, for example the PAN and/or card verification value (CVV), so these data do not need to be transmitted over any network in order for the token to be generated. This is in contrast to a prior art system using an external tokenisation system, which requires the user's financial data to be transmitted to it during token provisioning, thereby providing an opportunity for the data to be accessed by a third party using, for example, a man-in-the-middle style attack.

During the payment transaction of the present method, the only data it is necessary to transmit between the payment provider system, transaction processing system, and acquirer processing system are the token and transaction payment data after validation. These data, even if retrieved by a third party, cannot be used to obtain the user's personal or financial data, because it is not contained within the transaction payment data, and because it is not retrievable from the token without knowledge of how the token was created. In contrast, methods using an external tokenisation system necessitate the user's financial data, for example the PAN, being transmitted between the tokenisation system, the payment processing network, and the issuer computer. Each transmission of the user's financial data, and each additional system at which it is received, represents an opportunity for the security of that data to be breached by a third party.

The one-time transaction token may consist of data which only the payment provider system can identify as being associated with the user.

In this way, not only is the user's financial data not retrievable from the token, but a third party cannot even associate a particular user with a token. The method therefore provides an additional layer of security to the token.

The generating step b may comprise generating the one-time transaction token with token validation data corresponding to stored validation data of the user and/or payment provider, the validation data being inserted within the one-time token according to a defined validation computation policy. The stored validation data of the user and/or payment provider may comprise at least one of: a) User identification data; b) User account data; c) Network data; d) Payment provider identification data; e) Product type identification data; f) Current time stamp.

In this way, the method provides a secure token generation method. By using a defined validation computation policy, the validation data within the token is secure.

The validating step, f, may comprise: a) applying an inverse of the defined validation computation policy to the one-time transaction token to obtain the token validation data; b) then checking the token validation data against stored validation data of the user/or payment provider; and if the token validation data and stored validation data match sufficiently then flagging the one-time transaction token as validated.

In this way, the method allows only those parties who have access to the original defined validation computation policy to access the validation data. Parties having access to that data can then be controlled and minimised, thereby increasing the security of the data.

The defined validation computation policy and its inverse may be specific to each given payment provider, may be time-expiring, and may be redefined upon expiry.

In this way, the method provides a flexible and secure token generation method. The policy can then be changed periodically, for example after a certain time or for each token, to make the token more secure by resetting the time to breach the policy with a brute force attack, for example. By providing a different policy to each payment provider, for example to each bank, the data pertaining to each policy is reduced. In other words, there are a smaller number of transactions which use a certain policy in existence, because each payment provider uses a different policy. In general, the less data that exists pertaining to a method of security, the less easy it is for a third party to determine an encryption; in this case, the policy.

Generating the one-time token may comprise generating two sections of a one-time token and concatenating them together. When generating the one-time token comprises generating a first token section, the stored validation data of the user and/or payment provider used to generate the first token section may comprise at least one of: a) Network data; b) Payment provider identification data; and c) Product type identification data. When generating the one-time token comprises generating a second token section, the stored validation data of the user and/or payment provider used to generate the second token section may comprise at least one of: a) User account data; b) Current time stamp; c) Product type identification data; and d) Payment provider identification data.

The defined validation computation policy may comprise: computing a string using the token validation data, and at least one of: selecting a substring from the computed string according to a substring selection policy; and replacing certain bytes in the computed string, or selected substring, with replacement data from the token validation data according to a byte replacement policy.

Redefining the defined validation computation policy comprises altering the byte replacement policy, optionally wherein altering the byte replacement policy comprises altering at least one of: the computation of the string using the token validation data, including selection of a substring start point and/or end point; the number of, and/or position in the string of, the certain bytes of the computed string to be replaced; and the replacement data from the token validation data selected to replace the certain bytes.

The defined validation computation policy may be used only when generating the second token section, and not when generating the first token section.

Step d may comprise providing the one-time transaction token from the payment provider system directly to the transaction processing system and from there directly to an acquirer processing system, without any intervening processing of the one-time token.

The fewer systems that have access to the token, and the fewer times it is transmitted between said systems, the less likely it is that a third party will be able to access and/or gain user information from the token. By limiting these systems and transmissions, the method provides additional security. This is particularly true for external tokenisation systems, which will necessitate user financial data, such as a PAN or CVV, being transmitted. By avoiding the use of such systems, the present method significantly increases security.

Step e may comprise transmitting the one-time transaction token directly from the acquirer processing system to the identified payment provider system without any intervening processing of the one-time token.

Step g may comprise transmitting the transaction payment data directly to the acquirer processing system without any intervening processing of the transaction payment data.

In another aspect of the invention, there is a payment provider system, comprising a data processing apparatus, the data processing apparatus configured to: receive a request for a one-time transaction token from a user for a payment transaction initiated by the user; generate, in response to the request, a one-time transaction token; store the one-time transaction token; provide the one-time transaction token to the user; receive the token from an acquirer processing system, the acquirer processing system having received the token from the user, via a transaction processing system; validate the received one-time transaction token with the one-time transaction token previously generated; if validated, generate transaction payment data and transmit the transaction payment data to the acquirer processing system for it to complete the payment transaction. The payment provider system may be configured to perform any or all of the steps of the methods of the invention described herein that pertain to the payment provider system.

In another aspect of the invention, there is an acquirer processing system, comprising a data processing apparatus, the data processing apparatus configured to: receive a one-time transaction token from a transaction processing system, the token having been generated by a payment provider system and provided to the transaction processing system by a user; identify, based on the received one-time transaction token, the payment provider system which generated the one-time transaction token; transmit the one-time transaction token to the identified payment provider system; receive, from the identified payment provider system, transaction payment data, the transaction payment data having been generated by the payment provider system after validating the one-time transaction token. The acquirer processing system may be configured to perform any or all of the steps of the methods of the invention described herein that pertain to the acquirer processing system.

**Brief Description of the Drawings**

Fig.1 illustrates a known system for processing a payment transaction.
Embodiments of the invention will be described below, by way of example, with reference to the following drawings, in which:

Fig. 2 illustrates a system for securely processing a payment transaction according to an embodiment of the present invention.

Fig. 3 illustrates a method for securely processing a payment transaction according to an embodiment of the present invention

Fig. 4a illustrates a first token section according to an embodiment of the present invention.

Fig. 4b illustrates a first token section and a second token section concatenated to form a one-time transaction token according to an embodiment of the present invention.

Fig. 4c illustrates a first token section and an alternative second token section concatenated to form a one-time transaction token according to an embodiment of the present invention.

**Detailed Description**

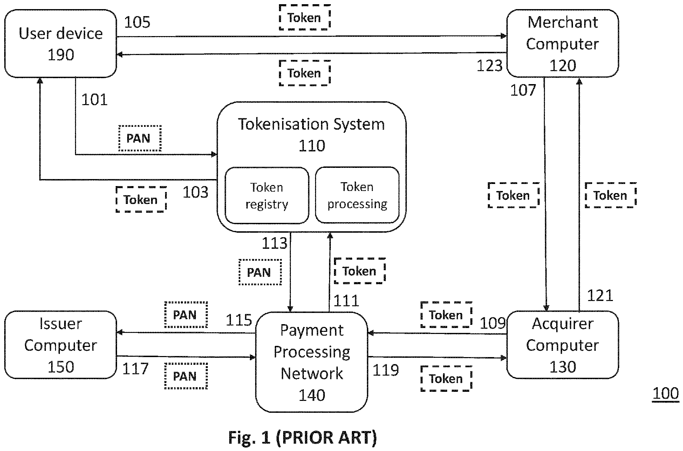

Fig. 1 illustrates a known system 100 for processing a payment transaction.
The system 100 comprises a user device 190, tokenisation system 110, merchant computer 120, acquirer computer 130, payment processing network 140, and issuer computer 150. The system may be used to process a payment transaction.
In a first step 101, the user device 190 sends a primary account number (PAN) to the tokenisation system 110, and receives 103 a token from the tokenisation system 110. The token is generated at the tokenisation system 110 in a token processing module. The token is associated with the PAN, and the association between the two is stored in a token registry. This may be referred to as provisioning a token, and the token is the often stored at the user device 190, for example, securely within a secure module accessible by a wallet application or banking application.

When a user wishes to initiate a transaction with a merchant, the previously provisioned token is transmitted from the user device 120 to the merchant computer 140 in step 105, from the merchant computer 140 to the acquirer computer 130 in a step 107, and from the acquirer computer 130 to at least one payment processing network 140 in a step 109. In step 111, the token is passed from the payment processing network 140 to the tokenisation system 110, where the PAN associated with the token is retrieved from the token registry.

The PAN is then sent to the payment processing network 140 in a step 113, and from the payment processing network 140 to the issuer computer 150 in a step 115. The issuer computer 150 will the return the PAN with authorisation to proceed with payment to the payment processing network in a step 117. The payment processing network 140 will then return the token with confirmation of payment to the user device 190 via the acquirer computer 130 and merchant computer 120 in steps 119, 121, and 123. The transaction is then complete.

The system of Fig. 1 provides a payment transaction in which the PAN is not available to the acquirer or merchant computer 130/120, and for that reason provides at least some security. The PAN is available only to the tokenisation system 110, user device 190, and issuer computer 150, all of whom must then be trusted parties in the transaction.

While secure in some ways, the system of Fig. 1 is limited by being based on a card based ecosystem, which necessitates the transfer of PAN details across networks, and between various parties. The number of times a PAN is transferred, and the number of parties it is transferred to, clearly have an impact on the security of the system. The more times the PAN is transmitted across networks, the more opportunities for a man-in-the-middle attack, and the more parties involved, the more points of weakness appear in the system and the more opportunities there are for breaches in security.

Furthermore, superfluous system complexity is disadvantageous for the speed of processing a transaction and the computational cost. If elements of the system can be replaced with a more efficient alternative, or removed entirely, both the processing requirements and the time to process a transaction can be reduced.

The present invention removes the need for a tokenisation system separate to the issuer bank, thereby removing the need for the PAN to be transferred over a network at all, and reducing the overall number of communications necessary between components of the system in order to complete a transaction.

*System for secure transaction processing*

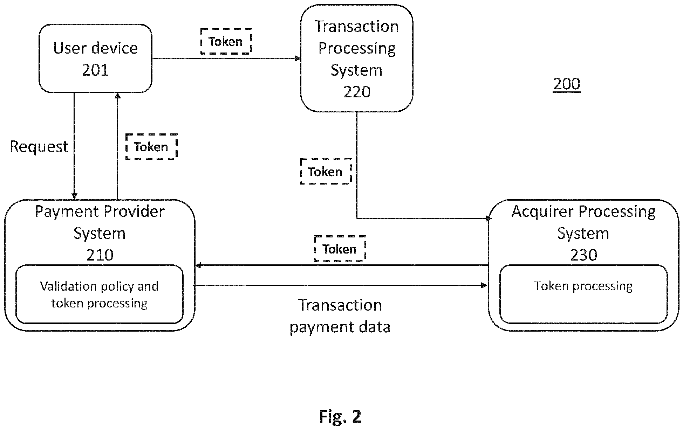

Fig. 2 illustrates a system for securely processing a payment transaction according to one embodiment of the present invention.

The system may comprise a user device 201, a payment provider system 210, a transaction processing system 220, and an acquirer processing system 230, each of which comprises a processor for processing data, memory for storing the data, along with a data transceiver for communicating the data to/from each device. The data transceiver is configured to communicate wired or wirelessly over a communications network, such as the internet, such that each of the aforementioned systems/devices can communicate with one another.

The payment provider system 210 comprises a validation policy processing module and token processing module implemented by computer executable code processed by the processor of the payment provider system 210. Validation policy processing and token processing may be performed by the same module. Any number of the aforementioned systems may be dedicated hardware or may be provisioned in a hosted computing system, for example, a cloud based computing system. The token processing module is configured to generate a one-time transaction token (hereinafter "token" or "transaction token") upon request by the user device 201.

The user device 201 is an electronic device which may be a mobile device, a wearable device, or other computing device. The user device 201 can comprise a secure module for holding each one-time transaction token that is received, so that each token is then securely accessible by an electronic wallet or other secure data processing application executing on the user device 201. Once used for its given transaction, a transaction token is deleted from the user device, e.g. deleted from the secure module.

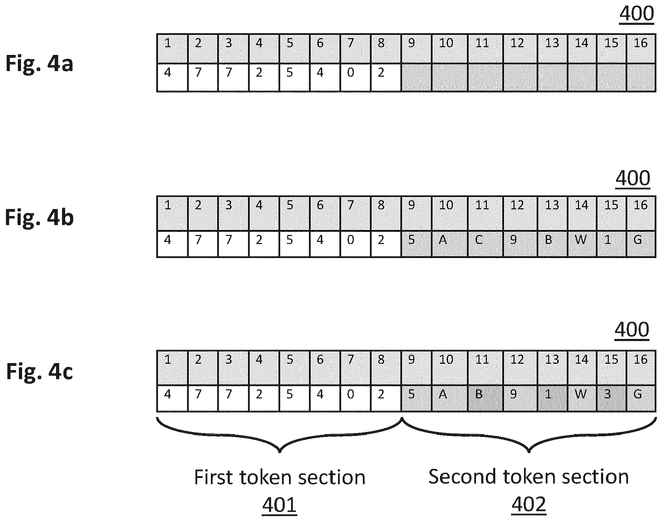

The user device 201 is configured to request a one-time transaction token from a specific payment provider system 210. This may happen when a user desires to make a payment transaction, with the user accessing a mobile wallet or mobile banking application executing on the user device 201 and initiating a request for such a transaction token via the application. The user of the user device 210 may request a token via their user device 201 immediately prior to attempting to initiate a transaction, and in response, the payment provider system 210 may be configured to provide a one-time token specifically for that transaction. The user device 201 and payment provider system 210 are configured to transmit data to one another. The token generated at the payment provider system 210 is generated according to the method of token generation described with reference to Figs. 4a, 4b and 4c.

The payment provider system 210 may additionally be configured to store the transaction token, once generated for a certain period of time, e.g. the token expiry time (time to live/cryptoperiod) associated and stored with the token. Moreover, the payment provider system 210 can be configured to store the transaction token along with additional data associated with the token, for example: the token time to live, data pertaining to the user device 201 that made the request, and/or the validation computation policy in use at the time of generating the token.

Each payment provider system 210 is typically a dedicated computing system associated with a single issuer bank, i.e. the bank from which funds will be taken if the transaction is completed. The issuer bank is the bank of the user and/or the bank which holds user account data related to the user.

Once received, the user device 201 is configured to transmit the transaction token to a transaction processing system 220. Alternatively, the user of the user device 201, having obtained the token via their user device 201, can then manually input the token into the transaction processing system 220. The transaction processing system 220 may be a Point of Sale terminal (PoS), Automated Teller Machine (ATM), a server (hosting a web browser or connected to a separate transaction processing server), a transaction processing device an attached scanner or attached NFC reader, or any other electronic device capable of receiving the token from the user and/or user device 201, and further capable of forwarding the token to the acquirer processing system 230.

The acquirer processing system 230 is a computing system which is typically associated with an acquirer bank, i.e. the bank to which the funds will be sent if the transaction is completed. The acquirer bank may be the bank of the merchant who will be the recipient of the funds if the transaction is completed.

The acquirer processing system 230 is configured to analyse the token in order to determine which one of a plurality payment provider systems 210 generated it. This is achieved based on the data contained within the token (see below). Once this has been done, the acquirer processing system 230 may be configured to transmit the transaction token to the identified payment provider system.

The payment provider system 210 identified by the transaction token is additionally configured to validate the token received from the acquirer processing system 230. The payment provider system 210 is configured to transmit transaction payment data to the acquirer processing system 230 in the case of a validated token to complete the transaction. The acquirer processing system 230 can also be configured transmit data to the user device 201, transaction processing system 230 and/or acquirer processing system 230 in the case of a failed validation of the token.

*Secure transaction processing*

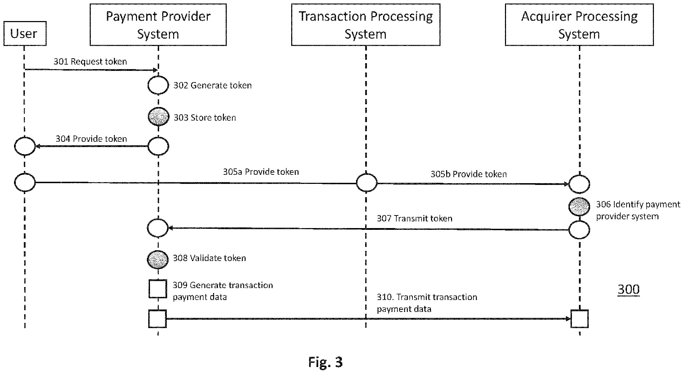

Fig. 3 is a data flow protocol 300 for securely processing a payment transaction according to one embodiment of the present invention.

At step 301, the user requests a one-time transaction token from the payment provider system 210 for a payment transaction initiated by the user. The request may be made from a user device 201 via the application associated with the payment provider system 210, or via an internet browser, or via any suitable wired and/or wireless communication made with the user device via the payment provider system 210. Thus, the request is made to one payment provider system 210 associated with the user, which can be one of a plurality of available payment provider systems which the user has selected. The request will identify the user (e.g. via a user ID associated with the user and other security credentials necessary to validate the user's identity) and a specific transaction (e.g. via a unique transaction identifier) sent to the payment provider system 210.

At step 302, the payment provider system 210, having identified the user, e.g. with the user ID associated with the user and the other security credentials received in the request, proceeds to generate a one-time transaction token for the specific transaction requested (e.g. as identified by the unique transaction identifier received). The token can be generated according to the method of token generation described in relation to Figs. 4a, 4b and 4c.

At step 303, the payment provider system 210 stores the one-time transaction token just generated and associates it with the corresponding transaction request just sent to it by the user device 201. The payment provider system 210 can store the token just generated and data associated with the token, for example one or more of: the token expiry time (time to live/cryptoperiod) of the token, the user ID, data pertaining to the user device 201 that made the request, unique transaction identifier and/or the validation computation policy in use at the time of generating the token.

At step 304, the payment provider system 210 provides the generated one-time transaction token to the user device 201. The token may be provided to the user via the communications network and then displayed on a user interface of a user device 201, displayed by the payment application executing on the user device 201, displayed on an internet browser. Alternatively, or in addition, the token may be stored by the user device 201, e.g. in its secure module, and is then be retrievable when the user device 201 provides the token to an external system. In this way, the token may then not be viewable by the user at all.

At step 305a, the user and/or user device 201 provides the token to the transaction processing system 220, and the transaction processing system 220 provides the token to an acquirer processing system in a step 305b. The transaction processing system 220 is configured to determine to which acquirer processing system 230 (of a plurality of acquirer processing systems) the token must be sent in order to initiate the transaction, or the user device 201 may determine the acquirer processing system to which the token must be sent in order to initiate the transaction. This is achieved because the token itself comprises data which is identifiable by the acquirer processing system to identify the payment provider system 210 previously accessed by the user device 201 to generate the token.

At step 306, the acquirer processing system 230 thus identifies the payment provider system 210 that generated the token. This may be achieved via analysis of the whole token, of a first token section, or of a second token section (see below). The token contains payment provider information, as described in further detail in relation to Figs. 4a, b, and c, which the acquirer processing system reads and/or extracts from the token and then processes to identify the payment provider system 210 which generated the token for the specific transaction being requested. The acquirer processing system can analyse the token, or one token section, in order to retrieve payment provider information, but cannot retrieve the user's personal or financial information because it does not possess the computation validation policy used to generate that token. The acquirer processing system may have a different, unique, computation validation policy for use in generating its own tokens, but this will not match the computation validation policy of the payment provider system.

At step 307, the acquirer processing system 230 transmits the token to the identified payment provider system 210 of a plurality of payment provider systems.

At step 308, the identified payment provider system 210 validates the received token from the acquirer processing system 230. Validation may include, as a first step, performing a look-up with the received token to determine whether a matching token is stored (e.g. by step 303) at the payment provider system 210. A first level of validation is achieved if the received token matches the stored token. If the received token matches a stored token, the time of generation of the received token can be retrieved from the stored token, i.e. from the time at which the stored token was generated and/or stored. The computation validation policy in use at the time of the token's generation can then be determined. A second level of validation can be achieved by applying the reverse of the computation validation policy in order to retrieve the underlying data, as will be explained in greater detail in relation to token generation and validation. If the token is validated, the payment provider system may generate (step 309), and return (step 310) transaction payment data to the acquirer processing system 230 in order to complete the transaction 230. The transaction payment data may be sent via the transaction processing system 220, or sent directly to the acquirer processing system 230. If the token is not validated, the payment provider system 210 may not perform any other actions. In some embodiments, if the token is not validated, the payment provider system 210 will send a notification to the user device 201, transaction processing system 220 and/or acquirer processing system 230 notifying the system(s) that the transaction has failed. The validation or non-validation result, and token, may then be discarded, or may be retained for a certain period and further analysis performed, for example, analysis of non-validation results may be carried out to detect fraudulent requests.

The transaction payment data received back at the acquirer processing system 230 comprises data sufficient for the acquirer processing system 230 to complete the transaction with the payment provider system 210, i.e. data with which the acquirer processing system 230 can obtain the fund amount of the transaction and user payment credentials (e.g. account details) associated with the given transaction as previously stored at the payment provider system 210. Once this payment data has been processed, the transaction is then complete.

*Token generation*

Referring to Figs. 4a, 4b and 4c, the structure of an exemplary token 400 for use with the aforementioned methods according to the present invention is depicted. In the depicted embodiment, the token is a one-time transaction token.

The one-time transaction token is a defined packet of data, preferably a group of bytes, which enables a party to determine characteristics of a user, a user's account, a user's account information, payment provider information, network data, a time stamp, and/or transaction data. The one-time transaction token comprises data which only the payment provider system can identify as being associated with the user.

The one-time transaction token 400 may be valid for only one transaction, unlike other transaction tokens which are associated with a primary account number (PAN).

The token in the depicted examples is 16 bytes long, and is partitioned into two token sections of equal length, namely first token section 401 and second token section 402, i.e. both token sections are 8 bytes long. It will be appreciated that this is by way of example only, and that a token suitable for use with the present invention may be more, or less, than 16 bytes long, that there may be more than two token sections, and that the token sections may not be equal in length. The data bytes of the token may be 8, 16, 32, 64 or 128 bytes in length. Byte, as used herein, refers to an individual character making up one of the numbers and/or letters in the token.

In the example of Fig. 4a, the first token section 401 is generated using stored validation data of the user and/or payment provider. This stored validation data may comprise network data, product type identification data, payment provider identification data, or any other data item that allows a recipient to validate the identity of either the user or the payment provider.

The first and/or second token sections 401, 402 are typically numeric and represented in a number of bytes of the token. This numeric requirement may be advantageous for compatibility with legacy token processing of conventional PAN token systems, which may be capable of reading a numerical byte string equivalent to the first token section 401.

The first and/or second token section 401, 402 may also contain alphanumeric data bytes, for example alphanumeric bytes represented by values according to an ASCII coding scheme or equivalent. This provides greater information density than a numeric token section, due to the greater number of possible values for each byte.

The second token section 402 is generated using stored validation data of the user and/or payment provider. This stored validation data may comprise user account data, product type identification data, and product type identification data.

A validation computation policy may be used to generate the first and/or second token section 401, 402. A validation computation policy may be defined as a set of instructions to take stored validation data and produce a token or token section from said stored validation data. The policy may be kept secure, or secret, such that only the generator of the token, or a third party trusted with the policy, can retrieve the stored validation data from the token or token section. This security both protects the underlying stored validation data and allows trusted parties to validate the origin of the token or token section because the token or token section may comprise the validation data of the user, making it useful for authorisation, may not visibly, or retrievably by an untrusted third party, comprise the validation data of the user, making it a secure format in which to transmit the validation data.

Continuing the example of Fig. 4a, Fig. 4b illustrates an exemplary second token section 402 appended to the first token section 401. Although in this example, the chronology is the generation of the first token section 401, then the second token section 402

A validation computation policy is used to generate the second token section 402. In one embodiment of the invention, the computation validation policy begins by computing a string using the token validation data. For example, a string may be calculated as:

$$\text{string} = \text{account number} + \text{product ID} + \text{current time stamp (ms)}$$

wherein account number may be the primary account number (PAN) of the user and thus constitutes user account data, the product ID may be product type identification data, and the current time stamp is the time of generation of the token section and may be measured in milliseconds.

The validation computation policy may then compute the bytes of the string. This computation may be performed with any encoding base that will be apparent to the skilled person, for example, MD5, SHA-1, and SHA-256.

The validation computation policy may then convert the result of the byte computation into a string of hexadecimal bytes, or a hex string.

A substring of a certain length may then be selected from the hex string, for example a substring of length 8 bytes.

In some embodiments, the selection of the substring, for example the selection of a substring start byte and a substring end byte, will vary between payment provider systems. For example, if the payment provider system is a bank, the bank may use a different substring selection policy to other banks.

The substring selection policy may also vary over time, and can expire after a certain period of time has passed. If a given token section is being verified after the substring selection policy has changed, a current time stamp within the token, for example in the first token section, may be used to identify the policy in place at the time of generation of the token.

The substring selected may be bytes that appear consecutively in the token string, for example, bytes 3 to 10 for an 8 byte substring. The substring selected may not be bytes that appear consecutively in the string, for example, a policy may select even bytes starting at byte location 4, giving a substring corresponding to byte 4, 6, 8, 10, 12, 14, 16, and 18 of the original string. The selection policy may therefore be limited by the length of the token string section.

After substring selection, the second token section 402 may then be considered to be fully generated, and is concatenated with the first token section 401 to produce the entire one-time token payment. Alternatively, the validation computation policy can continue to alter the hex substring to increase the security of the token. For example, the validation computation policy may continue with a bytewise replacement policy.

Fig. 4b illustrates an exemplary further step in the validation computation policy used to generate the second token section 402. Certain bytes from the hex substring generated in the previous step may be replaced with replacement bytes. In some embodiments, the replacement bytes are bytes selected from the stored validation data or may be predefined or randomly generated replacement bytes. A byte replacement policy will define the position of the bytes in the string which are to be replaced and/or the position of the bytes in the stored validation data which will replace them.

For example, in Fig. 4b the second token section has been computed as 5AC9BW1G. A byte replacement policy may determine that the bytes a byte positions 3, 5, and 7 are to be replaced. The byte replacement policy may also determine that these bytes are to be replaced by the final three bytes of the user's bank (issuer bank) branch code, in this example, the branch code is 010B13. As can be seen in Fig. 4b, the final three bytes of the branch code, B, 1, and 3, take the places of C, B, and 1 (byte positions 3, 5, and 7 in the second token section 402).

The second token section 402 may then be concatenated with the first token section 401 to produce the complete one-time transaction token.

Although in the aforementioned example the byte replacement policy has been applied to the selected hex substring, it will be appreciated that a byte replacement policy according to the present invention could be applied to the originally computed string. In other words, a validation computation policy according to the present invention may comprise one, or both of, a substring selection policy and a byte replacement policy.

*Token validation*

A token that has been generated in accordance with the present invention can be validated upon receipt by the payment provider system 210 from the acquirer processing system 230 by applying the reverse of the validation computation policy used to originally generate it in the. By having the payment provider system 210 perform the steps of the validation computation policy in reverse, the underlying stored validation data can be obtained and verified, for example by checking the retrieved validation data against a copy previously stored so as to identify the particular transaction, user and/or user device 201 which requested the token.

*Example use cases - Point of Sale Terminal*

A one-time token generated in accordance with the present invention may be used to facilitate a transaction at a point of sale terminal (POS). A one-time token may be generated on a user device, for example a mobile device, and input to the POS. Transfer of the token from the mobile device to the POS may be via a user mechanically entering the token value, it having been displayed on a user interface, by a contactless payment mechanism, for example near field communication (NFC), or by any other means that will be apparent to the skilled person.

*Example use cases - Automated Teller Machine (ATM)*

A one-time token generated in accordance with the present invention may be used to facilitate a transaction at an ATM. A one-time token may be generated on a user device, for example a mobile device, and input to the ATM. Transfer of the token from the mobile device to the ATM may be via a user mechanically entering the token value, it having been displayed on a user interface, by a contactless payment mechanism, for example near field communication (NFC), or by any other means that will be apparent to the skilled person. In some embodiments, because the ATM may be aware of certain information usually derived from the token, for example the payment provider information and network data, the user may only enter a second token section to the ATM.

*Example use cases - Online, e-commerce*

A one-time token generated in accordance with the present invention may be used to facilitate a transaction online, for example via a web page. A one-time token may be generated on a user device, for example a mobile device, and input to the web page. The token may be generated by the same device as is hosting the web page, or by a different device. Transfer of the token from the mobile device to the web page may be via a user mechanically entering the token value, it having been displayed on a user interface, a transfer between applications on the same device, a contactless transfer between two devices, for example a cloud based transfer, or by any other means that will be apparent to the skilled person. In some embodiments, the user may select a payment provider on the web page before token generation. In such embodiments, the user may only input a second token section to the web page, since the payment provider is known.

*Example use cases - Quick Response (QR) code*

A one-time token generated in accordance with the present invention may be represented with a machine readable code contained in a graphical representation from which scanning software can retrieve the token. One such exemplary graphical representation may be a QR code. A one-time token may be generated on a user device, for example as a QR code on the user interface of a mobile device. Transfer of the token from the mobile device may be achieved by a third party scanning the displayed QR code, decoding it, and retrieving the token. The scan may be performed in preference to an NFC transfer to a POS terminal, for example, by scanning equipment in communication with a POS terminal or computing system hosting a POS terminal. In some embodiments, the QR code may represent only one token section, and the user may select a payment provider on the mobile device, POS terminal, or host computer before the QR code is scanned.

It will be appreciated that the present invention has been described above wit reference to one or more specific embodiments. Modifications will be understood to be possible by the skilled person within the scope of the claims.

**Examples**

The invention is set out below by way of various numbered examples and provides a method for securely processing a payment transaction, a payment provider system (example 17 below) and an acquirer processing system (example 18 below). In addition there are one or more computer readable media executable to perform the method steps herein.

1. A method for securely processing a payment transaction, comprising:

a. requesting a one-time transaction token by a user from a payment provider system for a payment transaction initiated by the user;

b. in response to the request, generating by the payment provider system the one-time transaction token;

c. storing the one-time transaction token by the payment provider system;

d. providing the one-time transaction token to the user, and the user providing the one-time transaction token to a transaction processing system and from there to an acquirer processing system;

e. based on the one-time transaction token received, the acquirer processing system identifying the payment provider system which generated the one-time transaction token and transmitting the one-time transaction token to the identified payment provider system;

f. upon receipt of the one-time transaction token, the identified payment provider system validating the received one-time transaction token with the one-time transaction token previously generated by the identified payment provider system;

g. if validated, the identified payment provider system generating transaction payment data for the user and transmitting the transaction payment data to the acquirer processing system for it to complete the payment transaction.

2. The method of example 1, wherein the one-time transaction token consists of data which only the payment provider system can identify as being associated with the user.

3. The method of any one of the preceding examples, wherein the generating step b comprises generating the one-time transaction token with token validation data corresponding to stored validation data of the user and/or payment provider, the validation data being inserted within the one-time token according to a defined validation computation policy (implementable on the payment provider system and implementable on one or more computer readable media executable on the payment provider system).

4. The method according to example 3, wherein the stored validation data of the user and/or payment provider comprises at least one of:

a. User identification data;

b. User account data;

c. Network data;

d. Payment provider identification data;

e. Product type identification data;

f. Current time stamp.

5. The method of example 3 or 4, wherein the validating step f comprises:

a. applying an inverse of the defined validation computation policy to the one-time transaction token to obtain the token validation data; then

b. checking the token validation data against stored validation data of the user/or payment provider; and

c. if the token validation data and stored validation data match sufficiently then flagging the one-time transaction token as validated

(any or all of 5a to 5c may be implementable on the payment provider system and implementable on one or more computer readable media executable on the payment provider system).

6. The method of example 5, wherein the defined validation computation policy and its inverse are specific to each given payment provider.

7. The method of example 5 or example 6, wherein the defined validation computation policy and its inverse are time-expiring, and are redefined upon expiry (defining, redefining, and inverting the policy may be implementable on the payment provider system and implementable on one or more computer readable media executable on the payment provider system).

8. The method according to any one of examples 3 to 7, wherein generating the one-time token comprises generating two sections of a one-time token and concatenating them together (implementable on the payment provider system and implementable on one or more computer readable media executable on the payment provider system).

9. The method according to example 8, wherein generating the one-time token comprises generating a first token section, and wherein the stored validation data of the user and/or payment provider used to generate the first token section comprises at least one of:

    a. Network data;
    b. Payment provider identification data;
    c. Product type identification data; and
    d. Current time stamp

(any or all of 9a to 9d may be implementable on the payment provider system and implementable on one or more computer readable media executable on the payment provider system).

10. The method according to example 8 or 9, wherein generating the one-time token comprises generating a second token section, and wherein the stored validation data of the user and/or payment provider used to generate the second token section comprises at least one of:

    a. User account data;
    b. Current time stamp;
    c. Product type identification data; and
    d. Payment provider identification data

(any or all of 10a to 10d may be implementable on the payment provider system and implementable on one or more computer readable media executable on the payment provider system)..

11. The method according to example any one of examples 5 to 10, wherein the defined validation computation policy comprises:
computing a string using the token validation data, and at least one of:

    selecting a substring from the computed string according to a substring selection policy; and
    replacing certain bytes in the computed string, or selected substring, with replacement data from the token validation data according to a byte replacement policy (implementable on the payment provider system and implementable on one or more computer readable media executable on the payment provider system).

12. The method according to examples 7 and 11, wherein redefining the defined validation computation policy comprises altering the byte replacement policy, optionally wherein altering the byte replacement policy comprises altering at least one of:

    the computation of the string using the token validation data, including selection of a substring start point and/or end point;
    the number of, and/or position in the string of, the certain bytes of the computed string to be replaced; and
    the replacement data from the token validation data selected to replace the certain bytes (implementable on the payment provider system and implementable on one or more computer readable media executable on the payment provider system).

13. The method according to example 11, wherein the defined validation computation policy is used only when generating the second token section, and not when generating the first token section.

14. The method of any one of the preceding examples, wherein step d comprises providing the one-time transaction token from the user directly to the transaction processing system and from there directly to an acquirer processing system, without any intervening processing of the one-time token (implementable on the payment provider system and/or acquirer processing system, and implementable on one or more computer readable media executable on the payment provider system and/or acquirer processing system)..

15. The method of any one of the preceding examples, wherein step e comprises transmitting the one-time transaction token directly from the acquirer processing system to the identified payment provider system without any intervening processing of the one-time token (implementable on the payment provider system and/or acquirer processing system, and implementable on one or more computer readable media executable on the payment provider system and/or acquirer processing system)..

16. The method of any one of the preceding examples, wherein step g comprises transmitting the transaction payment data directly to the acquirer processing system without any intervening processing of the transaction payment data (implementable on the payment provider system and/or acquirer processing system, and implementable on one or more computer readable media executable on the payment provider system and/or acquirer processing system).

17. A payment provider system, comprising a data processing apparatus, the data processing apparatus configured to:

  receive a request for a one-time transaction token from a user for a payment transaction initiated by the user;
  generate, in response to the request, a one-time transaction token;
  store the one-time transaction token;
  provide the one-time transaction token to the user;
  receive the token from an acquirer processing system, the acquirer processing system having received the token from the user, via a transaction processing system;
  validate the received one-time transaction token with the one-time transaction token previously generated;
  if validated, generate transaction payment data and transmit the transaction payment data to the acquirer processing system for it to complete the payment transaction.

18. An acquirer processing system, comprising a data processing apparatus, the data processing apparatus configured to:

  receive a one-time transaction token from a transaction processing system, the token having been generated by a payment provider system and provided to the transaction processing system by a user;
  identify, based on the received one-time transaction token, the payment provider system which generated the one-time transaction token;
  transmit the one-time transaction token to the identified payment provider system;
  receive, from the identified payment provider system, transaction payment data, the transaction payment data having been generated by the payment provider system after validating the one-time transaction token.

19. A system, comprising a payment provider system according to example 17, an acquirer processing system according to example 18, and a transaction processing system.

**Claims**

1. A method for securely processing a payment transaction, comprising:

  a. requesting a one-time transaction token by a user from a payment provider system for a payment transaction initiated by the user;
  b. in response to the request, generating by the payment provider system the one-time transaction token;
  c. storing the one-time transaction token by the payment provider system;
  d. providing the one-time transaction token to the user, and the user providing the one-time transaction token to a transaction processing system and from there to an acquirer processing system;

e. based on the one-time transaction token received, the acquirer processing system identifying the payment provider system which generated the one-time transaction token and transmitting the one-time transaction token to the identified payment provider system;

f. upon receipt of the one-time transaction token, the identified payment provider system validating the received one-time transaction token with the one-time transaction token previously generated by the identified payment provider system;

g. if validated, the identified payment provider system generating transaction payment data for the user and transmitting the transaction payment data to the acquirer processing system for it to complete the payment transaction.

2. The method of claim 1, wherein the one-time transaction token consists of data which only the payment provider system can identify as being associated with the user.

3. The method of any one of the preceding claims, wherein the generating step b comprises generating the one-time transaction token with token validation data corresponding to stored validation data of the user and/or payment provider, the validation data being inserted within the one-time token according to a defined validation computation policy.

4. The method according to claim 3, wherein the stored validation data of the user and/or payment provider comprises at least one of:

a. User identification data;
b. User account data;
c. Network data;
d. Payment provider identification data;
e. Product type identification data;
f. Current time stamp.

5. The method of claim 3 or 4, wherein the validating step f comprises:

a. applying an inverse of the defined validation computation policy to the one-time transaction token to obtain the token validation data; then
b. checking the token validation data against stored validation data of the user/or payment provider; and
c. if the token validation data and stored validation data match sufficiently then flagging the one-time transaction token as validated,
optionally wherein the defined validation computation policy and its inverse are specific to each given payment provider and/or wherein the defined validation computation policy and its inverse are time-expiring, and are redefined upon expiry.

6. The method according to any one of claims 3 to 5, wherein generating the one-time token comprises generating two sections of a one-time token and concatenating them together.

7. The method according to claim 6, wherein generating the one-time token comprises generating a first token section, and wherein the stored validation data of the user and/or payment provider used to generate the first token section comprises at least one of:

a. Network data;
b. Payment provider identification data; and
c. Product type identification data.

8. The method according to claim 6 or 7, wherein generating the one-time token comprises generating a second token section, and wherein the stored validation data of the user and/or payment provider used to generate the second token section comprises at least one of:

a. User account data;
b. Current time stamp;
c. Product type identification data; and

d. Payment provider identification data.

9. The method according to claim any one of claims 5 to 8, wherein the defined validation computation policy comprises: computing a string using the token validation data, and at least one of:

   selecting a substring from the computed string according to a substring selection policy; and
   replacing certain bytes in the computed string, or selected substring, with replacement data from the token validation data according to a byte replacement policy,

   optionally wherein the defined validation computation policy is used only when generating the second token section, and not when generating the first token section.

10. The method according to claims 5 and 9, wherein redefining the defined validation computation policy comprises altering the byte replacement policy, optionally wherein altering the byte replacement policy comprises altering at least one of:

    the computation of the string using the token validation data, including selection of a substring start point and/or end point;
    the number of, and/or position in the string of, the certain bytes of the computed string to be replaced; and
    the replacement data from the token validation data selected to replace the certain bytes.

11. The method of any one of the preceding claims, wherein step d comprises providing the one-time transaction token from the user directly to the transaction processing system and from there directly to an acquirer processing system, without any intervening processing of the one-time token, and/or wherein step e comprises transmitting the one-time transaction token directly from the acquirer processing system to the identified payment provider system without any intervening processing of the one-time token.

12. The method of any one of the preceding claims, wherein step g comprises transmitting the transaction payment data directly to the acquirer processing system without any intervening processing of the transaction payment data.

13. A payment provider system, comprising a data processing apparatus, the data processing apparatus configured to:

    receive a request for a one-time transaction token from a user for a payment transaction initiated by the user;
    generate, in response to the request, a one-time transaction token;
    store the one-time transaction token;
    provide the one-time transaction token to the user;
    receive the token from an acquirer processing system, the acquirer processing system having received the token from the user, via a transaction processing system;
    validate the received one-time transaction token with the one-time transaction token previously generated;
    if validated, generate transaction payment data and transmit the transaction payment data to the acquirer processing system for it to complete the payment transaction.

14. An acquirer processing system, comprising a data processing apparatus, the data processing apparatus configured to:

    receive a one-time transaction token from a transaction processing system, the token having been generated by a payment provider system and provided to the transaction processing system by a user;
    identify, based on the received one-time transaction token, the payment provider system which generated the one-time transaction token;
    transmit the one-time transaction token to the identified payment provider system;
    receive, from the identified payment provider system, transaction payment data, the transaction payment data having been generated by the payment provider system after validating the one-time transaction token.

15. A system, comprising a payment provider system according to claim 13, an acquirer processing system according to claim 14, and a transaction processing system.

**Fig. 1 (PRIOR ART)**

Fig. 2

| User | Payment Provider System | Transaction Processing System | Acquirer Processing System |
|---|---|---|---|

301 Request token

302 Generate token

303 Store token

304 Provide token

305a Provide token

305b Provide token

306 Identify payment provider system

307 Transmit token

308 Validate token

309 Generate transaction payment data

310. Transmit transaction payment data

300

Fig. 3

**Fig. 4a**

400

| 1 | 2 | 3 | 4 | 5 | 6 | 7 | 8 | 9 | 10 | 11 | 12 | 13 | 14 | 15 | 16 |
|---|---|---|---|---|---|---|---|---|----|----|----|----|----|----|----|
| 4 | 7 | 7 | 2 | 5 | 4 | 0 | 2 |   |    |    |    |    |    |    |    |

**Fig. 4b**

400

| 1 | 2 | 3 | 4 | 5 | 6 | 7 | 8 | 9 | 10 | 11 | 12 | 13 | 14 | 15 | 16 |
|---|---|---|---|---|---|---|---|---|----|----|----|----|----|----|----|
| 4 | 7 | 7 | 2 | 5 | 4 | 0 | 2 | 5 | A  | C  | 9  | B  | W  | 1  | G  |

**Fig. 4c**

400

| 1 | 2 | 3 | 4 | 5 | 6 | 7 | 8 | 9 | 10 | 11 | 12 | 13 | 14 | 15 | 16 |
|---|---|---|---|---|---|---|---|---|----|----|----|----|----|----|----|
| 4 | 7 | 7 | 2 | 5 | 4 | 0 | 2 | 5 | A  | B  | 9  | 1  | W  | 3  | G  |

First token section
401

Second token section
402

Europäisches
Patentamt

European
Patent Office

Office européen
des brevets

# EUROPEAN SEARCH REPORT

Application Number

EP 20 20 7048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/087823 A1 (PATEL KEYUR [IN] ET AL) 21 March 2019 (2019-03-21) * abstract; figures 1-3 * * paragraphs [0005] - [0011], [0021], [0032] - [0042] * | 1-15 | INV. G06Q30/06 G06Q20/38 |
| X | US 2018/232728 A1 (DOOLEY TERRY DEAN [US] ET AL) 16 August 2018 (2018-08-16) * abstract; figures 1-4 * * paragraphs [0006] - [0008], [0019], [0022] - [0027], [0032], [0036] - [0049], [0056] - [0065] * | 1-15 | |
| X | US 2014/344153 A1 (RAJ THANIGAIVEL ASHWIN [US] ET AL) 20 November 2014 (2014-11-20) * abstract; figures 3-5 * * paragraphs [0054] - [0067], [0079], [0091], [0113] - [0127] * | 1-15 | |
| X | US 2020/151711 A1 (HASHIMOTO KENSUKE [JP] ET AL) 14 May 2020 (2020-05-14) * abstract; figures 1-5 * * paragraphs [0013] - [0015], [0033] - [0063] * | 1-15 | TECHNICAL FIELDS SEARCHED (IPC) G06Q G07G |

The present search report has been drawn up for all claims

| Place of search | Date of completion of the search | Examiner |
|---|---|---|
| The Hague | 26 March 2021 | Berlea, Alexandru |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 20 7048

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2021

| Patent document cited in search report | | Publication date | Patent family member(s) | | Publication date |
|---|---|---|---|---|---|
| US 2019087823 | A1 | 21-03-2019 | NONE | | |
| US 2018232728 | A1 | 16-08-2018 | NONE | | |
| US 2014344153 | A1 | 20-11-2014 | AU | 2014265291 A1 | 26-11-2015 |
| | | | BR | 112015028628 A2 | 25-07-2017 |
| | | | CA | 2912695 A1 | 20-11-2014 |
| | | | CN | 105359179 A | 24-02-2016 |
| | | | EP | 2997532 A1 | 23-03-2016 |
| | | | HK | 1219163 A1 | 24-03-2017 |
| | | | KR | 20160008619 A | 22-01-2016 |
| | | | SG | 10201709411R A | 30-01-2018 |
| | | | SG | 10202008740Y A | 29-10-2020 |
| | | | SG | 11201509386U A | 30-12-2015 |
| | | | US | 2014344153 A1 | 20-11-2014 |
| | | | US | 2018247303 A1 | 30-08-2018 |
| | | | WO | 2014186635 A1 | 20-11-2014 |
| US 2020151711 | A1 | 14-05-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20200034837 A1